(19) Europäisches Patentamt
European Patent Office
Office européen des brevets

(11) **EP 2 516 192 B1**

(12) **EUROPÄISCHE PATENTSCHRIFT**

(45) Veröffentlichungstag und Bekanntmachung des Hinweises auf die Patenterteilung:
**09.01.2019   Patentblatt 2019/02**

(21) Anmeldenummer: **10778978.6**

(22) Anmeldetag: **05.11.2010**

(51) Int Cl.:
*B60K 6/48* *(2007.10)*　　*B60W 20/00* *(2016.01)*
*B60W 10/06* *(2006.01)*　　*B60W 10/08* *(2006.01)*

(86) Internationale Anmeldenummer:
**PCT/EP2010/066888**

(87) Internationale Veröffentlichungsnummer:
**WO 2011/076473 (30.06.2011 Gazette 2011/26)**

(54) **VERFAHREN UND VORRICHTUNG ZUR PLAUSIBILISIERUNG EINES VON EINER ELEKTRISCHEN MASCHINE AUFGEBRACHTEN ANTRIEBSMOMENTES IN EINEM HYBRIDANTRIEB EINES KRAFTFAHRZEUGES**

METHOD AND DEVICE FOR PLAUSIBILITY CHECKING OF A DRIVING TORQUE APPLIED BY AN ELECTRICAL ENGINE IN A HYBRID DRIVE OF A MOTOR VEHICLE

PROCÉDÉ ET DISPOSITIF POUR ÉTABLIR LA VRAISEMBLANCE D'UN COUPLE D'ENTRAÎNEMENT APPLIQUÉ PAR UNE MACHINE ÉLECTRIQUE DANS UN ENTRAÎNEMENT HYBRIDE D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2009   DE 102009055062**

(43) Veröffentlichungstag der Anmeldung:
**31.10.2012   Patentblatt 2012/44**

(73) Patentinhaber: **Robert Bosch GmbH**
**70442 Stuttgart (DE)**

(72) Erfinder:
• **KIESER, Joerg**
 **74321 Bietigheim-Bissingen (DE)**
• **BARDOLL, Albert**
 **70839 Gerlingen (DE)**
• **MUELLER, Danny**
 **72644 Oberboihingen (DE)**

(56) Entgegenhaltungen:
**DE-A1- 4 133 059**　　**DE-A1-102005 040 780**
**DE-A1-102008 000 869**　　**DE-A1-102008 008 536**

## Beschreibung

Stand der Technik

Die Erfindung betrifft ein Verfahren zur Plausibilisierung eines von einer elektrischen Maschine aufgebrachten Antriebsmomentes in einem Hybridantrieb eines Kraftfahrzeuges, wobei das Kraftfahrzeug von der elektrischen Maschine und/oder einem Verbrennungsmotor angetrieben wird, wobei überprüft wird, ob das von der elektrischen Maschine aufgebrachte Antriebsmoment genau bestimmt ist sowie eine Vorrichtung zur Durchführung des Verfahrens.

Fahrzeuge mit einer hybriden Antriebsstruktur weisen meistens einen Verbrennungsmotor als erstes Antriebsaggregat und als zweites Antriebsaggregat eine elektrische Maschine oder einen Hydraulikmotor auf. Auch weitere Antriebsaggregate sind möglich. Das Antriebsmoment während des Fahrbetriebs des Hybridfahrzeuges kann somit von den Antriebsaggregaten zusammen aufgebracht werden.

Bei einem solchen Hybridsystem wird der Verbrennungsmotor in bestimmten Betriebspunkten vom Antriebsstrang getrennt und gestoppt, wodurch neben einer niedrigeren Abgasemission ein geringerer Kraftstoffverbrauch auftritt. Das Fahrzeug bewegt sich rein elektrisch durch die motorisch geschaltete elektrische Maschine und die in einer Hochvoltbatterie gespeicherte Energie zum Antrieb der elektrischen Maschine. Durch die Umschaltung der elektrischen Maschine in einen generatorischen Betrieb wird Leistung in die Hochvoltbatterie zurückgespeist, wenn der Verbrennungsmotor wieder an den Antriebsstrang angekuppelt ist, wodurch die Hochvoltbatterie geladen wird. Eine Ladung der Hochvoltbatterie ist aber auch bei einem abgekoppelten Verbrennungsmotor möglich. Zur Durchführung der automatischen Lade- und Entladevorgänge ist im jeweiligen Steuergerät eine Betriebsstrategie hinterlegt.

Ausgehend von der jeweiligen Betriebsstrategie wird von dem Steuergerät der elektrischen Maschine als Antriebsmoment ein Drehmoment der elektrischen Maschine berechnet, welches von der elektrischen Maschine ausgeführt wird. Dieses berechnete Drehmoment muss sehr genau sein, um insbesondere im Hybridbetrieb des Kraftfahrzeuges eine optimale Arbeitsweise des aus Verbrennungsmotor und elektrischer Maschine bestehenden Antriebsstranges zu ermöglichen.

Aus der DE 10 2005 062 870 A1 ist ein Verfahren bekannt, bei welchem in einem Fahrzeugsteuergerät ein kontinuierlicher Momentenvergleich innerhalb einer Überwachungsebene erfolgt. Dabei wird ein zulässiges Moment ermittelt. Mittels einer Momentenbereichsüberprüfung wird festgestellt, ob das ermittelte Soll-Moment innerhalb von Momentenbereichen zweier Einzelantriebe liegt.

Weiterhin zeigt die DE 41 33 051 A1 eine Antriebsanordnung für ein Kraftfahrzeug mit einer Brennkraftmaschine und einer von der Brennkraftmaschine angetriebenen elektrischen Generatoranordnung. Ein das Kraftfahrzeug antreibender Elektromotor wird aus der Generatoranordnung gespeist. Im Rahmen einer Diagnose soll nun der mechanische Zustand der Brennkraftmaschine ermittelt werden, insbesondere auf die Kompression beziehungsweise Verdichtung einzelner Zylinder, auf die Funktionsfähigkeit von Einlassventilen und Auslassventilen, auf den Zustand der Lagerstellen oder auch auf die Zylinderwandreibung. Zu diesem Zweck wird während eines Motorbetriebs der Generatoranordnung der momentane Verlauf des Stromes bei abgestellter Zündung und/oder Kraftstoffzufuhr der Brennkraftmaschine erfasst und hiervon abhängig der momentane Verlauf des von der Generatoranordnung erzeugten Schleppmoments in Abhängigkeit vom Kurbelwellenwinkel der Brennkraftmaschine ermittelt.

Schließlich zeigt die DE 10 2008 008 536 A1 ein Verfahren für die Steuerung einer elektrischen Maschine eines Elektrofahrzeugs, die von einer Energieversorgungseinrichtung mit Energie versorgt wird. Dabei ist vorgesehen, dass die Steuersignale für die Steuerung der elektrischen Maschine erfasst werden, dass der Betriebszustand der elektrischen Maschine erfasst wird, dass der erfasste Betriebszustand der elektrischen Maschine auf Plausibilität mit denen der elektrischen Maschine zugeführten Steuersignalen überprüft wird und dass bei Auftreten eines irregulären Betriebszustands der elektrischen Maschine die Verbindung zwischen der elektrischen Maschine und der Energieversorgungseinrichtung unterbrochen wird.

Offenbarung der Erfindung

Das erfindungsgemäße Verfahren zur Plausibilisierung eines von einer elektrischen Maschine aufgebrachten Antriebsmomentes in einem Hybridantrieb eines Kraftfahrzeuges mit den Merkmalen des Anspruchs 1 weist den Vorteil auf, dass im Fahrbetrieb des Kraftfahrzeuges die Betriebsstrategie korrekt ausgeführt wird beziehungsweise eine Lastpunktverschiebung im Antriebsstrang zuverlässig funktioniert. Dadurch, dass das von der elektrischen Maschine aufgebrachte Antriebsmoment mittels eines von dem Verbrennungsmotor während einer Schubabschaltung erzeugten Schleppmomentes hinsichtlich seiner Genauigkeit bewertet wird, lassen sich Fehler in der Berechnung des Drehmomentes der elektrischen Maschine zuverlässig erkennen. Die Prüfung der Genauigkeit des als Antriebsmoment ausgebildeten und berechneten Drehmomentes kann sowohl über einen Werkstatt-Test angesteuert werden, als auch durch eine Prüfroutine während des Fahrbetriebes des Kraftfahrzeuges aufgerufen werden. Zusätzliche bauliche Einheiten werden für diese Prüfung nicht benötigt.

Vorteilhafterweise werden die elektrische Maschine und/oder der Verbrennungsmotor auf eine vorgegebene Gesamtdrehzahl eingestellt, wobei eine zwischen der elektrischen Maschine und dem Verbrennungsmotor angeordnete Trennkupplung geschlossen wird und der Verbrennungsmotor in den Zustand der Schubabschaltung versetzt wird und das von der elektrischen Maschine während der Schubabschaltung des Verbrennungsmotors aufgebrachte Antriebsmoment bestimmt wird, wobei die elektrische Maschine ein genaues Antriebsmoment erzeugt, wenn das aufgebrachte Antriebsmoment dem Schleppmoment des Verbrennungsmotors annähernd entspricht. Mit Hilfe der Plausibilisierung des korrekten Drehmomentes der elektrischen Maschine kann nicht nur festgestellt werden, ob im Fahrbetrieb die Betriebsstrategie zuverlässig ausgeführt wird, sondern die elektrische Maschine kann auch in einer Bandendeprüfung nach der Herstellung des Kraftfahrzeuges schnell und einfach auf ihre Funktionsfähigkeit getestet werden.

In einer Ausgestaltung wird bei einem Unterschied zwischen dem von der elektrischen Maschine während der Schubabschaltung des Verbrennungsmotors aufgebrachten Antriebsmoment und dem Schleppmoment ein Fehler angezeigt. Durch eine Information des Fahrers wird diesem ein möglicher Defekt der elektrischen Maschine bzw. des die elektrische Maschine ansteuernden Steuergerätes frühzeitig signalisiert So kann der Fahrer eine Werkstatt aufsuchen, um den Fehler beheben zu lassen, damit der Hybridantrieb immer unter optimalen Bedingungen der jeweiligen Betriebsstrategie betrieben werden kann. Die Anzeige des Komponentenfehlers an einer Bandendeprüfung oder in einer Werkstatt erleichtert außerdem die Fehlersuche.

In einer Variante wird bei einem Unterschied zwischen dem von der elektrischen Maschine während der Schubabschaltung des Verbrennungsmotors aufgebrachten Antriebsmoment und dem Schleppmoment das fehlerhaft bestimmte Antriebsmoment der elektrischen Maschine durch eine entsprechend dem Fehler bestimmte Offsetänderung korrigiert. Somit kann das verwendete Steuergerät mit der in diesem implementierten Software weiter benutzt werden. Diese Vorgehensweise ist insbesondere dann sinnvoll, wenn die Prüfung des Antriebsmomentes während des Fahrbetriebes des Kraftfahrzeuges erfolgt, welcher dann immer mit einem korrigierten positiven Drehmoment der elektrischen Maschine während des Hybridantriebes als Antriebsmoment fortgesetzt werden kann.

Ist eine Korrektur des fehlerhaften Drehmomentes der elektrischen Maschine nicht möglich, wird bei einem Unterschied zwischen dem von der elektrischen Maschine während der Schubabschaltung des Verbrennungsmotors aufgebrachten Antriebsmoment und dem Schleppmoment ein Notlaufbetrieb des Kraftfahrzeuges gestartet. Dieses Notlaufprogramm kann eine Korrektur des Solldrehmomentes des Verbrennungsmotors enthalten, damit eine Lastpunktverschiebung greift und der Verbrennungsmotor weiterhin in einem optimalen Betriebspunkt betrieben werden kann. Alternativ oder zusätzlich kann ein Verbot des Stopps des Verbrennungsmotors hinterlegt werden, um ein Liegenbleiben des Kraftfahrzeuges bei einer defekten elektrischen Maschine zu verhindern.

In einer Weiterbildung werden zur Schubabschaltung des Verbrennungsmotors die Einspritzventile des Verbrennungsmotors geschlossen. Damit wird sichergestellt, dass in dem Verbrennungsmotor keine Verbrennungsprozesse mehr ablaufen und der Verbrennungsmotor aktiv keinen Beitrag zum Antrieb des Antriebsstranges des Kraftfahrzeuges leistet. Der Verbrennungsmotor wird lediglich durch die elektrische Maschine auf der vorgegebenen Drehzahl gehalten.

Vorteilhafterweise arbeitet während der Schubabschaltung des Verbrennungsmotors die elektrische Maschine zur Einstellung der vorgegebenen Drehzahl in einem Drehzahlregelmodus. Dadurch wird die vorgegebene Drehzahl immer konstant gehalten und die Drehmomentenprüfung unter vergleichbaren Bedingungen ausgeführt.

In einer Ausgestaltung wird die vorgegebene Drehzahl durch einen Regler der elektrischen Maschine eingestellt und das aufgebrachte Antriebsmoment der elektrischen Maschine mit einem modellierten Schleppmoment des Verbrennungsmotors verglichen. Um eine sehr genaue Überprüfung des berechneten Drehmomentes der elektrischen Maschine durchzuführen, muss das Schleppmoment, welches der Verbrennungsmotor zum Zeitpunkt der Prüfung aufweist, genau bestimmt werden, da es unter den verschiedenen Betriebbedingungen des Motors variiert. In einer Variante wird das modellierte Schleppmoment des Verbrennungsmotors in Abhängigkeit unterschiedlicher Betriebsparameter, insbesondere der Temperatur, der Drehzahl und der Last, während eines Prüfstandsbetriebes des Verbrennungsmotors ermittelt und als Kennfeld abgespeichert. Zum Vergleich des durch die elektrische Maschine während der Prüfung aufgebrachten Drehmomentes müssen nur die aktuellen Betriebsparameter des Verbrennungsmotors bestimmt werden, um dass geeignete Schleppmoment für die Prüfung auszuwählen.

Um die Messfehler auszuschließen, wird das Antriebsmoment der elektrischen Maschine bei unterschiedlichen Gesamtdrehzahlen der elektrischen Maschine und des Verbrennungsmotors mit dem modellierten Schleppmoment verglichen. Dabei wird jeweils ein arithmetischer Mittelwert über die Einzelmessungen gebildet, um einen zu hohen Einzelwert auszugrenzen.

Eine Weiterbildung der Erfindung betrifft eine Vorrichtung zur Plausibilisierung eines von einer elektrischen Maschine aufgebrachten Antriebsmomentes in einem Hybridantrieb eines Kraftfahrzeuges, wobei das Kraftfahrzeug von der elektrischen Maschine und/oder einem Verbrennungsmotor angetrieben wird, wobei überprüft wird, ob das von der elektrischen Maschine aufgebrachte Antriebsmoment entsprechend einer vorgegebenen Antriebsstrategie genau bestimmt ist. Um sicher zu stellen, dass im Fahrbetrieb des Kraftfahrzeuges die Betriebsstrategie korrekt ausgeführt wird beziehungsweise eine Lastpunktverschiebung im Antriebsstrang zuverlässig funktioniert, sind Mittel vorhanden, welche das von der elektrischen Maschine aufgebrachte Antriebsmoment mittels eines von dem Verbrennungsmotor während einer Schubabschaltung erzeugten Schleppmomentes hinsichtlich seiner Genauigkeit bewerten. Dies hat den Vorteil, dass Fehler in der Berechnung des Drehmomentes der elektrischen Maschine zuverlässig erkannt werden.

Vorteilhafterweise werden die elektrische Maschine und der Verbrennungsmotor von wenigstens einem Steuergerät angesteuert, welches einen Regler zur Regelung der Drehzahl des Elektromotors und einen Speicher zur Speicherung der modellierten Schleppmomente des Verbrennungsmotors aufweist, wobei das Steuergerät das Antriebsmoment der elektrischen Maschine entsprechend der Betriebsstrategie des Kraftfahrzeuges berechnet und mit dem Schleppmoment vergleicht. Somit ist die Prüfung des Antriebsmomentes der elektrischen Maschine ohne zusätzliche Hilfsmittel möglich.

In einer Ausprägung ist die elektrische Maschine auf einer Antriebswelle des Verbrennungsmotors angeordnet, was auch als paralleler Hybridantriebsstrang bezeichnet wird. Durch diese Anordnung von Verbrennungsmotor und elektrischer Maschine wird die Prüfung verbessert, da keine zusätzliche Getriebeübersetzungsstufe dazwischen liegt und die elektrische Maschine auf dieselbe Welle ein Drehmoment überträgt wie der Verbrennungsmotor.

Die Erfindung lässt zahlreiche Ausführungsformen zu. Eine davon soll anhand der in der Zeichnung dargestellten Figuren näher erläutert werden.

Es zeigt:

Figur 1: schematisches Ausführungsbeispiel für ein als Parallelhybrid ausgeführtes Hybridfahrzeug

Figur 2: schematisches Ablaufdiagramm zur Prüfung eines Antriebsmomentes eines Elektromotors

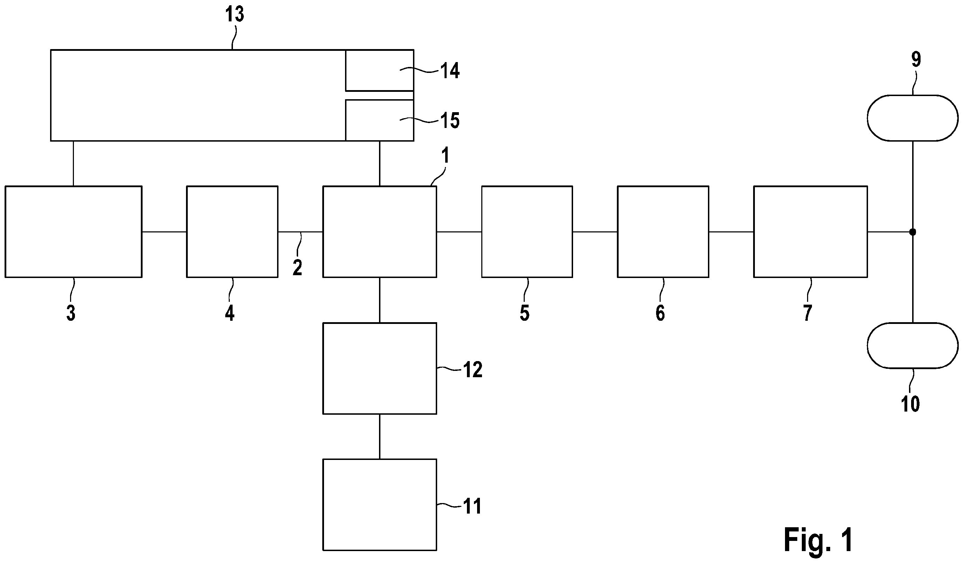

Figur 1 zeigt ein als Parallelhybrid ausgebildetes Hybridfahrzeug. In dieser Ausbildung ist ein Elektromotor 1 auf der Antriebswelle 2 eines Verbrennungsmotors 3 angeordnet. Der Verbrennungsmotor 3 ist über eine Trennkupplung 4 mit dem Elektromotor 1 verbunden. Der Elektromotor 1 führt über eine Anfahrkupplung 5 auf einen Drehmomentwandler 6, welcher mit einem Getriebe 7 verbunden ist. Das Getriebe 7 ist an eine Achse 8 geführt, an welcher die Räder 9, 10 angeordnet sind, die von dem beschriebenen Antriebsstrang angetrieben werden.

Der Elektromotor 1 wird von einer Hochvoltbatterie 11 mit Energie versorgt, welche über einen Inverter 12 mit dem Elektromotor 1 verbunden ist. Gesteuert werden der Elektromotor 1 und der Verbrennungsmotor 3 von einem Motorsteuergerät 13. Das Motorsteuergerät 13 umfasst einen Speicher 14, in welchem Schleppmomente des Verbrennungsmotors 3 für verschiedene Betriebszustände des Verbrennungsmotors 3 abgelegt sind.

Es gibt verschiedene Betriebsbereiche, in welchen ein Parallelhybrid betrieben werden kann. In einem ersten Betriebsbereich ist die Trennkupplung 4 geöffnet und der Verbrennungsmotor 3 von Antriebsstrang getrennt und automatisch gestoppt. Das Hybridfahrzeug wird rein elektrisch durch den motorisch geschalteten Elektromotor 1 und die in der Hochvoltbatterie 11 gespeicherte Energie angetrieben.

Sinkt der Energieinhalt in der Hochvoltbatterie 11 unter eine bestimmte Schwelle, wird der Verbrennungsmotor 3 automatisch gestartet und an den Antriebsstrang angekuppelt, was durch Schließung der Trennkupplung 4 erfolgt. Der Verbrennungsmotor 3 trägt nun zum Antrieb des Hybridfahrzeuges bei. In diesem zweiten Betriebsbereich erfolgt eine Umschaltung des Elektromotors 1 in den generatorischen Betrieb, in welchem nun wieder Leistung in die Hochvoltbatterie 11 zurückgespeist wird. Die Hochvoltbatterie 11 wird geladen.

Die Strategie der Durchführung der automatischen Lade- und Entladevorgänge hängt von der jeweiligen im Motorsteuergerät 13 hinterlegten Betriebsstrategie ab, welche sich grundlegend nach der Hochvoltbatterie 11 ausrichtet, da die Hochvoltbatterie 11 nie tiefentladen werden darf. Bei derzeit bekannten Hochvoltbatterien liegt die unterste Schwelle bei 25%.

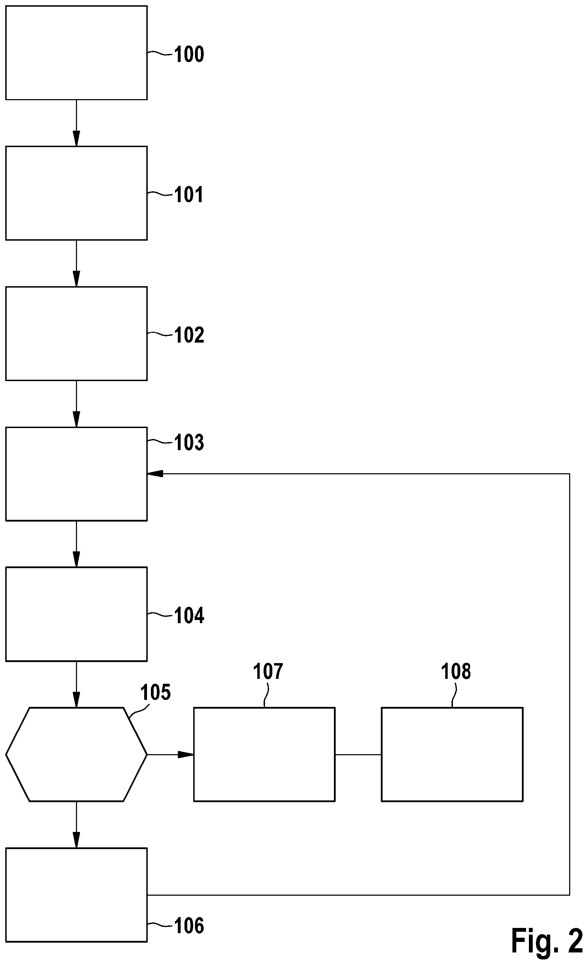

Mit Hilfe von Figur 2 soll ein Ausführungsbeispiel für die Plausibilisierung des Antriebsmomentes des Elektromotors 1 erläutert werden. Eine solche Plausibilisierung wird entweder dann durchgeführt, wenn ein Fehlerverdacht während des Fahrbetriebes des Kraftfahrzeuges gegeben ist. Diese Prüfung kann aber auch standardmäßig als Bandendeprüfung bei der Herstellung des Kraftfahrzeuges durchgeführt werden.

Im Block 100 wird die Anfahrkupplung 5 zwischen dem Drehmomentenwandler 6 und der Antriebswelle 2 geöffnet, auf welcher der Verbrennungsmotor 3 und der Elektromotor 1 angeordnet sind. Damit wird sicher gestellt, dass sich das Kraftfahrzeug im Stillstand befindet und kein Kraftschluss zu den Antriebsrädern eingestellt ist. Im Block 101 werden die Umgebungsbedingungen des Hybridantriebes geprüft. Dabei wird der Ladungszustand der Hochvoltbatterie 11 dahingehend bewertet, ob ausreichend Energie zum Antrieb des Elektromotors 1 vorhanden ist. Weiterhin werden unter anderem die Temperatur des Elektromotors 1, der Inverter 12 und weitere Komponenten des elektrischen Antriebes geprüft. Erlauben die vorliegenden Umgebungsbedingungen keine Prüfung des Antriebsmomentes des Elektromotors 1, beispielsweise, weil die Hochvoltbatterie über einen zu geringen Energiestatus verfügt, wird zu Block 100 zurückgekehrt. Sind die Umgebungsbedingungen des Hybridantriebes für eine Prüfung ausreichend, wird zum Block 102 übergegangen, in welchem Leerlaufbedingungen des Hybridantriebes konditioniert werden. Zu diesen Leerlaufbedingungen gehört das Schließen der Trennkupplung 4 zwischen dem Elektromotor 1 und dem Verbrennungsmotor 3. In diesem Schritt wird auch der Verbrennungsmotor 3 im Leerlauf befeuert, was bedeutet, dass im Verbrennungsmotor 3 ein Kraftstoff-LuftGemisch verbrannt wird, was dazu führt, dass der Verbrennungsmotor 3 einen aktiven Beitrag zum Antrieb der Antriebswelle 2 leistet. Darüber hinaus wird in diesem Schritt die Hochvoltbatterie 11 dahingehend eingestellt, dass der Ladezustand der Hochvoltbatterie 11 beispielsweise 50% aufweist. Weiterhin wird dafür Sorge getragen, dass sich das Öl des Verbrennungsmotors 3 in einem betriebswarmen Zustand befindet, was beispielsweise bei einer Temperatur von 80°C gegeben ist.

Ist die Konditionierung des Hybridantriebes im Leerlauf abgeschlossen, wird im Block 103 eine Gesamtdrehzahl n des Antriebsstranges (Verbrennungsmotor 3 und Elektromotor 1) auf eine definierte Drehzahl von 4000 rpm angehoben. Ist die Drehzahl stabil auf 4000 rpm eingestellt, beginnt im Block 104 die eigentliche Prüfung des Antriebsmomentes des Elektromotors 1. Dabei wird der Verbrennungsmotor 3 in den Zustand "Schubabschaltung" gebracht, was bedeutet, dass der Verbrennungsmotor 3 keinen eigenen Beitrag zum Antrieb der Antriebswelle 2 leistet. Der Elektromotor 1 wird in den Drehzahlregelmodus geschaltet, um die Gesamtdrehzahl n des Antriebes bei 4000 rpm zu halten. Dies wird durch den in dem Steuergerät 13 enthaltenen Regler 15 des Elektromotors 1 durchgeführt. Der Regler 15 kann alternativ aber auch im Inverter 12 enthalten sein, welcher ein Steuergerät umfasst. Dabei wird der Verbrennungsmotor 3 von dem Elektromotor 1 mechanisch geschleppt, so dass sich dieser auch mitdreht.

Das Steuergerät 13 berechnet das aktuelle Drehmoment $Md_{Eres}$ des Elektromotors 1 in diesem Zustand.

Für die Berechnung des Drehmoment $Md_{Eres}$ des Elektromotors 1 gilt:

$$P = Md_{Eres} * \omega \quad \text{und} \quad P = U * I_E$$

$$Md_{Eres} * \omega = U * I_E,$$

wobei

$\omega$    Winkelgeschwindigkeit des Elektromotors 1
U    am Elektromotor 1 anliegende Spannung
$I_E$    der durch den Elektromotor 1 fließende Strom kennzeichnen.

Die Winkelgeschwindigkeit $\omega$ wird bestimmt aus $\omega = 2 \pi n$, wobei n die eingestellte Gesamtdrehzahl von 4000 rpm ist.

$$Md_{Eres} = \frac{U * I_E}{\omega} = \frac{U * I_E}{2 * \pi * n}$$

Der durch den Elektromotor 1 fließende Strom $I_E$ wird über einen Widerstand am Elektromotor 1 gemessen.

Im Block 104 wird das berechnete resultierende Drehmoment $Md_{Eres}$ von dem Schleppmoment $Md_{VSchlepp}$ des Verbrennungsmotors 3 abgezogen. Das Schleppmoment $Md_{VSchlepp}$ wird aus einem Kennfeld entnommen, welches in dem Speicher 14 des Steuergerätes 13 in Abhängigkeit der Last L, einer Öltemperatur T und der Drehzahl n abgelegt ist. Daraus wird eine Differenz $Md_{delta}$ bestimmt.

$$Md_{delta} = Md_{VSchlepp} - Md_{Eres}.$$

Diese Differenz $Md_{delta}$ wird im Block 105 mit einem Schwellwert verglichen, welcher eine Toleranzbreite für die Abweichung darstellt. Ist die Differenz $Md_{delta}$ kleiner als der Schwellwert, ist das berechnete Drehmoment $Md_{Eres}$ des Elektromotors 1 in Ordnung (Block 106). Anschließend wird vom Block 106 in den Block 103 zurückgekehrt, wo für den Elektromotor 1 und den Verbrennungsmotor 3 eine neue Gesamtdrehzahl n von 3000 rpm eingestellt wird und die Blöcke 104 bis 105 erneut durchlaufen werden. Bei einem positiven Ergebnis werden die Blöcke 104 und 105 als weitere Prüfung bei einer neuen Drehzahl n = 2000 rpm durchlaufen.

Wird im Block 105 festgestellt, dass die Differenz $Md_{delta}$ größer ist als der zulässige Schwellwert, ist das von dem Elektromotor 1 aufgebrachte resultierende Drehmoment $Md_{Eres}$ nicht in Ordnung. Nachdem im Block 107 dieser Fehler detektiert wurde, werden im Block 108 Notlaufmassnahmen eingeleitet, wie beispielsweise ein Verbot zum Stopp des Verbrennungsmotors 3. Damit wird verhindert, dass das Kraftfahrzeug auf Grund des Fehlers im Elektromotor 1 liegenbleibt, da dass Kraftfahrzeug dann immer noch mit dem Verbrennungsmotor 3 weiterfahren kann.

**Patentansprüche**

1. Verfahren zur Plausibilisierung eines von einer elektrischen Maschine aufgebrachten Antriebsmomentes in einem Hybridantrieb eines Kraftfahrzeuges, wobei das Kraftfahrzeug von der elektrischen Maschine (1) und/oder einem Verbrennungsmotor (3) angetrieben wird, wobei nach abgeschlossener Konditionierung des Hybridantriebs im Leerlauf überprüft wird, ob das von der elektrischen Maschine (1) aufgebrachte Antriebsmoment ($Md_{Eres}$) genau bestimmt ist, **dadurch gekennzeichnet, dass** das von der elektrischen Maschine (1) aufgebrachte Antriebsmoment ($Md_{Eres}$) mittels eines von dem Verbrennungsmotor (3) während einer Schubabschaltung erzeugten Schleppmomentes ($Md_{VSchlepp}$) hinsichtlich seiner Genauigkeit bewertet wird.

2. Verfahren nach Anspruch 1 **dadurch gekennzeichnet, dass** die elektrische Maschine (1) und/oder der Verbrennungsmotor (3) auf eine vorgegebene Gesamtdrehzahl (n) eingestellt werden, wobei eine zwischen der elektrischen Maschine (1) und dem Verbrennungsmotor (3) angeordnete Trennkupplung (4) geschlossen wird und der Verbrennungsmotor (3) in den Zustand der Schubabschaltung versetzt wird und das von der elektrischen Maschine (1) während der Schubabschaltung des Verbrennungsmotors (3) aufgebrachte Antriebsmoment ($Md_{Eres}$) bestimmt wird, wobei die elektrische Maschine (1) ein genaues Antriebsmoment ($Md_{Eres}$) erzeugt, wenn das aufgebrachte Antriebsmoment ($Md_{Eres}$) dem Schleppmoment ($Md_{VSchlepp}$) des Verbrennungsmotors (3) annähernd entspricht.

3. Verfahren nach Anspruch 2 **dadurch gekennzeichnet, dass** bei einem Unterschied zwischen dem von der elektrischen Maschine (1) während der Schubabschaltung des Verbrennungsmotors (3) aufgebrachten Antriebsmoment ($Md_{Eres}$) und dem Schleppmoment ($Md_{VSchlepp}$) ein Fehler angezeigt wird.

4. Verfahren nach Anspruch 2 oder 3 **dadurch gekennzeichnet, dass** bei einem Unterschied zwischen dem von der elektrischen Maschine (1) während der Schubabschaltung des Verbrennungsmotors (3) aufgebrachten Antriebsmoment ($Md_{Eres}$) und dem Schleppmoment ($Md_{VSchlepp}$) das fehlerhaft bestimmte Antriebsmoment ($Md_{Eres}$) der elektrischen Maschine (1) durch eine entsprechend dem Fehler bestimmte Offsetänderung korrigiert wird.

5. Verfahren nach Anspruch 2 oder 3 **dadurch gekennzeichnet, dass** bei einem Unterschied zwischen dem von der elektrischen Maschine (1) während der Schubabschaltung des Verbrennungsmotors (3) aufgebrachten Antriebsmoment ($Md_{Eres}$) und dem Schleppmoment ($Md_{VSchlepp}$) ein Notlaufbetrieb des Kraftfahrzeuges gestartet wird.

6. Verfahren nach wenigstens einem der vorhergehenden Ansprüche **dadurch gekennzeichnet, dass** zur Schubabschaltung des Verbrennungsmotors (3) die Einspritzventile des Verbrennungsmotors (3) geschlossen werden.

7. Verfahren nach wenigstens einem der vorhergehenden Ansprüche **dadurch gekennzeichnet, dass** während der Schubabschaltung des Verbrennungsmotors (3) die elektrische Maschine (1) zur Einstellung der vorgegebenen Gesamtdrehzahl (n) in einem Drehzahlregelmodus arbeitet.

8. Verfahren nach Anspruch 7 **dadurch gekennzeichnet, dass** die vorgegebene Gesamtdrehzahl (n) durch einen Regler (15) der elektrischen Maschine (1) eingestellt wird und das aufgebrachte Antriebsmoment ($Md_{Eres}$) der elektrischen Maschine (1) mit einem modellierten Schleppmoment ($Md_{VSchlepp}$) des Verbrennungsmotors (3) verglichen wird.

9. Verfahren nach Anspruch 8 **dadurch gekennzeichnet, dass** das modellierte Schleppmoment ($Md_{VSchlepp}$) des Verbrennungsmotors (3) in Abhängigkeit unterschiedlicher Betriebsparameter, insbesondere der Temperatur (T), der Drehzahl und der Last (L), während eines Prüfstandsbetriebes des Verbrennungsmotors (3) ermittelt und als Kennfeld abgespeichert wird.

10. Verfahren nach mindestens einem der vorhergehenden Ansprüche **dadurch gekennzeichnet, dass** das Antriebsmoment ($Md_{Eres}$) der elektrischen Maschine (1) bei unterschiedlichen Gesamtdrehzahlen (n) mit dem modellierten Schleppmoment ($Md_{VSchlepp}$) des Verbrennungsmotors (3) verglichen wird.

11. Vorrichtung zur Plausibilisierung eines von einer elektrischen Maschine aufgebrachten Antriebsmomentes in einem Hybridantrieb eines Kraftfahrzeuges, wobei das Kraftfahrzeug von der elektrischen Maschine (1) und/oder einem Verbrennungsmotor (3) angetrieben wird, wobei nach abgeschlossener Konditionierung des Hybridantriebs im Leerlauf überprüft wird, ob das von der elektrischen Maschine (1) aufgebrachte Antriebsmoment ($Md_{Eres}$) genau bestimmt ist, **dadurch gekennzeichnet, dass** Mittel (13, 14, 15) vorhanden sind, welche das von der elektrischen Maschine (1) aufgebrachte Antriebsmoment ($Md_{Eres}$) mittels eines von dem Verbrennungsmotor (3) während einer Schubabschaltung erzeugten Schleppmomentes ($Md_{VSchlepp}$) hinsichtlich seiner Genauigkeit bewerten.

12. Vorrichtung nach Anspruch 11 **dadurch gekennzeichnet, dass** die elektrische Maschine (1) und der Verbrennungsmotor (3) von wenigstens einem Steuergerät (13) angesteuert werden, welches einen Regler (15) zur Regelung der Drehzahl des Elektromotors (1) und einen Speicher (14) zur Speicherung der modellierten Schleppmomente des Verbrennungsmotors (3) aufweist, wobei das Steuergerät (13) das Antriebsmoment ($Md_{Eres}$) der elektrischen Maschine (1) berechnet und mit dem modellierten Schleppmoment (Md$_{VSchlepp}$) vergleicht.

13. Vorrichtung nach Anspruch 11 oder 12 **dadurch gekennzeichnet, dass** die elektrische Maschine (1) auf einer Antriebswelle (2) des Verbrennungsmotors (3) angeordnet ist.

**Claims**

1. Method for plausibility checking a drive torque, applied by an electric machine, in a hybrid drive of a motor vehicle, wherein the motor vehicle is driven by the electric machine (1) and/or an internal combustion engine (3), wherein after the conditioning of the hybrid drive has been terminated in the idling mode it is checked whether the drive torque (Md$_{Eres}$) which is applied by the electric machine (1) is precisely determined, **characterized in that** the drive torque (Md$_{Eres}$) which is applied by the electric machine (1) is evaluated in terms of its precision by means of a drag torque (Md$_{VSchlepp}$) which is generated by the internal combustion engine (3) during an overrun cut-off.

2. Method according to Claim 1, **characterized in that** the electric machine (1) and/or the internal combustion engine (3) are/is set to a predefined overall rotational speed (n), wherein a clutch (4) which is arranged between the electric machine (1) and the internal combustion engine (3) is closed, and the internal combustion engine (3) is placed in the overrun cut-off state, and the drive torque (Md$_{Eres}$) which is applied by the electric machine (1) during the overrun cut-off of the internal combustion engine (3) is determined, wherein the electric machine (1) generates a precise drive torque (Md$_{Eres}$) if the applied drive torque (Md$_{Eres}$) corresponds approximately to the drag torque (Md$_{VSchlepp}$) of the internal combustion engine (3).

3. Method according to Claim 2, **characterized in that** when there is a difference between the drive torque (Md$_{Eres}$), which is applied by the electric machine (1) during the overrun cut-off of the internal combustion engine (3), and the drag torque (Md$_{VSchlepp}$), a fault is displayed.

4. Method according to Claim 2 or 3, **characterized in that** when there is a difference between the drive torque (Md$_{Eres}$), which is applied by the electric machine (1) during the overrun cut-off of the internal combustion engine (3), and the drag torque (Md$_{VSchlepp}$), the drive torque (Md$_{Eres}$), which is determined as being incorrect, of the electric machine (1) is corrected by means of an offset change determined in accordance with the fault.

5. Method according to Claim 2 or 3, **characterized in that** when there is a difference between the drive torque (Md$_{Eres}$), which is applied by the electric machine (1) during the overrun cut-off of the internal combustion engine (3), and the drag torque (Md$_{VSchlepp}$), an emergency operating mode of the motor vehicle is started.

6. Method according to at least one of the preceding claims, **characterized in that** for the overrun cut-off of the internal combustion engine (3) the injection valves of the internal combustion engine (3) are closed.

7. Method according to at least one of the preceding claims, **characterized in that** during the overrun cut-off of the internal combustion engine (3) the electric machine (1) operates to set the predefined overall rotational speed (n) in a rotational speed control mode.

8. Method according to Claim 7, **characterized in that** the predefined overall rotational speed (n) is set by a controller (15) of the electric machine (1), and the drive torque (Md$_{Eres}$) applied by the electric machine (1) is compared with a modelled drag torque (Md$_{VSchlepp}$) of the internal combustion engine (3).

9. Method according to Claim 8, **characterized in that** the modelled drag torque (Md$_{VSchlepp}$) of the internal combustion engine (3) is determined as a function of different operating parameters, in particular the temperature (T), the rotational speed the load (L) during a test bench operation of the internal combustion engine (3), and is stored as a characteristic diagram.

10. Method according to at least one of the preceding claims, **characterized in that** the drive torque (Md$_{Eres}$) of the electric machine (1) is compared with the modelled drag torque (Md$_{VSchlepp}$) of the internal combustion engine (3) at different overall rotational speeds (n).

11. Device for plausibility checking a drive torque, applied by an electric machine, in a hybrid drive of a motor vehicle, wherein the motor vehicle is driven by the electric machine (1) and/or an internal combustion engine (3), wherein after the conditioning of the hybrid drive has been terminated in the idling mode it is checked whether the drive torque (Md$_{Eres}$) which is applied by the electric machine (1) is precisely determined, **characterized in that** means (13, 14, 15) are present which evaluate the precision of the drive torque (Md$_{Eres}$), applied by the electric machine (1), by means of a drag torque (Md$_{VSchlepp}$) which is generated by the internal combustion engine (3) during an overrun cut-off.

**12.** Device according to Claim 11, **characterized in that** the electric machine (1) and the internal combustion engine (3) are actuated by at least one control device (13) which has a controller (15) for controlling the rotational speed of the electric motor (1) and a memory (14) for storing the modelled drag torques of the internal combustion engine (3), wherein the control device (13) calculates the drive torque ($Md_{Eres}$) of the electric machine (1) and compares it with the modelled drag torque ($Md_{VSchlepp}$).

**13.** Device according to Claim 11 or 12, **characterized in that** the electric machine (1) is arranged on a drive shaft (2) of the internal combustion engine (3).


**Revendications**

**1.** Procédé pour vérifier la plausibilité d'un couple d'entraînement appliqué par une machine électrique dans un groupe propulseur hybride d'un véhicule automobile, le véhicule automobile étant propulsé par la machine électrique (1) et/ou un moteur à combustion interne (3), un contrôle étant effectué après que le conditionnement du groupe propulseur hybride est terminé en vue de vérifier si le couple d'entraînement ($Md_{Eres}$) appliqué par la machine électrique (1) est déterminé avec précision, **caractérisé en ce que** la précision du couple d'entraînement ($Md_{Eres}$) appliqué par la machine électrique (1) est évaluée au moyen d'un couple de traînée ($Md_{VSchlepp}$) généré par le moteur à combustion interne (3) pendant un arrêt de la propulsion.

**2.** Procédé selon la revendication 1, **caractérisé en ce que** la machine électrique (1) et/ou le moteur à combustion interne (3) sont réglés à une vitesse de rotation totale (n) prédéfinie, un accouplement de séparation (4) disposé entre la machine électrique (1) et le moteur à combustion interne (3) étant fermé et le moteur à combustion interne (3) étant mis dans l'état d'arrêt de la propulsion et le couple d'entraînement ($Md_{Eres}$) appliqué par la machine électrique (1) pendant l'arrêt de la propulsion du moteur à combustion interne (3) étant déterminé, la machine électrique (1) générant un couple d'entraînement ($Md_{Eres}$) précis lorsque le couple d'entraînement ($Md_{Eres}$) appliqué correspond approximativement au couple de traînée ($Md_{VSchlepp}$) du moteur à combustion interne (3).

**3.** Procédé selon la revendication 2, **caractérisé en ce qu'**une erreur est signalée dans le cas d'une différence entre le couple d'entraînement ($Md_{Eres}$) appliqué par la machine électrique (1) pendant l'arrêt de la propulsion du moteur à combustion interne (3) et le couple de traînée ($Md_{VSchlepp}$).

**4.** Procédé selon la revendication 2 ou 3, **caractérisé en ce que** dans le cas d'une différence entre le couple d'entraînement ($Md_{Eres}$) appliqué par la machine électrique (1) pendant l'arrêt de la propulsion du moteur à combustion interne (3) et le couple de traînée ($Md_{VSchlepp}$), le couple d'entraînement ($Md_{Eres}$) déterminé erroné de la machine électrique (1) est corrigé par une variation de décalage déterminée en fonction de l'erreur.

**5.** Procédé selon la revendication 2 ou 3, **caractérisé en ce que** dans le cas d'une différence entre le couple d'entraînement ($Md_{Eres}$) appliqué par la machine électrique (1) pendant l'arrêt de la propulsion du moteur à combustion interne (3) et le couple de traînée ($Md_{VSchlepp}$), un mode de fonctionnement de secours du véhicule automobile est démarré.

**6.** Procédé selon au moins l'une des revendications précédentes, **caractérisé en ce que** l'arrêt de la propulsion du moteur à combustion interne (3) s'effectue en fermant les soupapes d'injection du moteur à combustion interne (3).

**7.** Procédé selon au moins l'une des revendications précédentes, **caractérisé en ce que** pendant l'arrêt de la propulsion du moteur à combustion interne (3), la machine électrique (1) fonctionne dans un mode de régulation de la vitesse de rotation en vue de régler la vitesse de rotation totale (n) prédéfinie.

**8.** Procédé selon la revendication 7, **caractérisé en ce que** la vitesse de rotation totale (n) prédéfinie est réglée par un régulateur (15) de la machine électrique (1) et le couple d'entraînement ($Md_{Eres}$) appliqué de la machine électrique (1) est comparé à un couple de traînée ($Md_{VSchlepp}$) modélisé du moteur à combustion interne (3).

**9.** Procédé selon la revendication 8, **caractérisé en ce que** le couple de traînée ($Md_{VSchlepp}$) modélisé du moteur à combustion interne (3) est déterminé en fonction de différents paramètres de fonctionnement, notamment la température (T), la vitesse de rotation et la charge (L) pendant un fonctionnement sur banc d'essai du moteur à combustion interne (3) et mis en mémoire en tant que diagramme caractéristique.

**10.** Procédé selon au moins l'une des revendications précédentes, **caractérisé en ce que** le couple d'entraînement ($Md_{Eres}$) de la machine électrique (1) est comparé au couple de traînée ($Md_{VSchlepp}$) modélisé du moteur à combustion interne (3) à différentes vitesses de rotation totales (n).

**11.** Dispositif pour vérifier la plausibilité d'un couple d'entraînement appliqué par une machine électrique dans un groupe propulseur hybride d'un véhicule automobile, le véhicule automobile étant propulsé par la machine électrique (1) et/ou un moteur à combustion interne (3), un contrôle étant effectué après que le conditionnement du groupe propulseur hybride est terminé en vue de vérifier si le couple d'entraînement ($Md_{Eres}$) appliqué par la machine électrique (1) est déterminé avec précision, **caractérisé en ce que** des moyens (13, 14, 15) sont présents, qui évaluent la précision du couple d'entraînement ($Md_{Eres}$) appliqué par la machine électrique (1) au moyen d'un couple de traînée ($Md_{VSchlepp}$) généré par le moteur à combustion interne (3) pendant un arrêt de la propulsion.

12. Dispositif selon la revendication 11, **caractérisé en ce que** la machine électrique (1) et le moteur à combustion interne (3) sont commandés par au moins un contrôleur (13), lequel possède un régulateur (15) destiné à réguler la vitesse de rotation du moteur électrique (1) et une mémoire (14) destinée à enregistrer les couples de traînée modélisés du moteur à combustion interne (3), le contrôleur (13) calculant le couple d'entraînement ($Md_{Eres}$) de la machine électrique (1) et le comparant au couple de traînée ($Md_{VSchlepp}$) modélisé.

13. Dispositif selon la revendication 11 ou 12, **caractérisé en ce que** la machine électrique (1) est disposée sur un arbre d'entraînement (2) du moteur à combustion interne (3).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005062870 A1
- DE 4133051 A1
- DE 102008008536 A1